# EUROPÄISCHE PATENTSCHRIFT

(11) **EP 1 925 536 B1**
(45) Veröffentlichungstag und Bekanntmachung des Hinweises auf die Patenterteilung: **26.05.2010**
(21) Anmeldenummer: 07021073.7
(22) Anmeldetag: 27.10.2007
(51) Int. Cl.: B62D 25/14

(54) **Querträger, insbesondere ein Cockpitquerträger**
Cross-member, in particular a cockpit cross-member
Traverses, en particulier traverses de cockpit

(30) Priorität: 24.11.2006 DE 102006055506
(43) Veröffentlichungstag der Anmeldung: 28.05.2008
(73) Patentinhaber: Dr. Ing. h.c. F. Porsche AG, 70435 Stuttgart (DE)
(72) Erfinder: Meier, Steffen, 74392 Freudental (DE)

(56) Entgegenhaltungen:
- EP-A- 1 529 720
- EP-A- 1 762 468
- DE-A1- 10 029 813
- US-B1- 6 176 544

## Beschreibung

Die vorliegende Erfindung betrifft einen Querträger, insbesondere einen Cockpitquerträger in einem Kraftfahrzeug, der beidendig mit einer Karosserie des Kraftfahrzeugs verbindbar ist, gemäß dem Oberbegriff des Anspruchs 1. Die Erfindung betrifft außerdem ein mit einem derartigen Querträger ausgestattetes Fahrzeug.

Aus der US-P1-6,176,544 ist ein Querträger in einem Kraftfahrzeug bekannt, der sich seitlich an A-Säulen einer Karosserie und in einem mittleren Bereich über ein Stützelement am Boden abstützt, wobei der Querträger zwei Querträgerelemente und einen Verbindungsträger aufweist und wobei der Verbindungsträger einen Toleranzausgleich in Fahrzeugquerrichtung erlaubt.

Eine ähnliche Ausführungsform eines Querträgers ist aus der US 5,931,520 bekannt.

Weiter ist aus der DE 101 52 242 A1 ein Modulträger für die Befestigung eines Armaturenbretts sowie von Bedien- und Anzeigelementen eines Kraftfahrzeugs bekannt, welcher an seinen Endbereichen Anschlussstellen zur Verbindung mit der Fahrzeugzelle aufweist. Dabei ist der Modulträger in Form eines Dreibeins ausgebildet, wobei die Anschlussstellen an den Enden des Dreibeins jeweils mit der A-Säule auf der Fahrerseite, mit dem Längsmitteltunnel im Bodenbereich und mit dem Scheibenquerträger verbindbar sind.

Um einen möglichst eigenspannungsfreien Zusammenbau eines Kraftfahrzeugs zu ermöglichen, sollten möglichst viele Bauteilkomponenten möglichst lange einen Toleranzausgleich während der Fertigung ermöglichen. Sind die einzelnen Fahrzeugkomponenten miteinander verbunden, so können die zunächst lose Verbindungen fixiert und dadurch eine steife Verbindung zwischen den einzelnen Fahrzeugkomponenten hergestellt werden.

Die vorliegende Erfindung beschäftigt sich mit Problem, für einen Querträger der gattungsgemäßen Art eine verbesserte Ausführungsform anzugeben, welche insbesondere einen spannungsfreien Einbau in ein Kraftfahrzeug ermöglicht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Querträger, insbesondere einen Cockpitquerträger, modular aufzubauen und die einzelnen Module erst in einem sehr späten Fertigungsschritt fest miteinander zu verbinden. Dabei weist der erfindungsgemäße Querträger zumindest zwei Querträgerelemente auf, die in einem mittleren Bereich des Querträgers über einen Verbindungsträger miteinander verbunden sind. Dieser Verbindungsträger erlaubt einen Ausgleich von Fertigungstoleranzen in Fahrzeugquerrichtung. Darüber hinaus stützt sich der Querträger in seinem mittleren Bereich mit dem Verbindungsträger über ein Stützelement an der Karosserie des Kraftfahrzeugs, insbesondere an einem Längsmitteltunnel, ab wobei hier die Verbindung zwischen dem Verbindungsträger und dem Stützelement einen Toleranzausgleich in vertikaler Richtung ermöglicht. Hierdurch kann ein vorzugsweise spannungsfreier Einbau des Querträgers im Kraftfahrzeug erreicht werden, wobei die Verbindungen zwischen dem Verbindungsträger einerseits und den beiden Querträgerelementen bzw. dem Stützelement andererseits erst zu einem sehr späten Fertigungsschritt fixiert werden, in welchem der Querträger bereits seine entgültige Einbauposition eingenommen hat. Durch die erfindungsgemäße Lösung ist es somit möglich, Toleranzen, insbesondere Fertigungstoleranzen, nicht nur in Fahrzeugquerrichtung, d.h. in Längsrichtung des Querträgers auszugleichen, sondern auch in vertikaler Richtung, da die Verbindung zwischen dem Verbindungsträger und dem den Querträger auf dem Längsmitteltunnel abstützenden Stützelement ebenfalls einen Toleranzausgleich ermöglicht.

Zweckmäßig sind der Verbindungsträger und ein jeweiliger Längsendbereich der beiden Querträgerelemente und/oder der Verbindungsträger und ein Längsendbereich des Stützelements formschlüssig miteinander verbindbar. Eine derartige formschlüssige Verbindung erleichtert den Zusammenbau des erfindungsgemäßen Querträgers und dessen Einbau in das Kraftfahrzeug, wobei gemäß einer besonders bevorzugten Ausführungsform die Verbindung zwischen den genannten Komponenten als Steckverbindungen ausgebildet sind, welche durch ein oder mehr weniger weites Ineinanderstecken den gewünschten Toleranzausgleich ermöglichen.

Bei einer vorteilhaften Weiterbildung der erfindungsgemäßen Lösung weist der Verbindungsträger eine gekrümmte Form. Durch eine derartige gekrümmte Form, lassen sich beispielsweise Querträgerelemente miteinander verbinden, deren Achsen nicht koaxial verlaufen, so dass die beiden Querträgerelemente beispielsweise versetzt zueinander und/oder geneigt zueinander angeordnet sein können. Der erfindungsgemäße Verbindungsträger ermöglicht so auch eine Verbindung von Querträgerelementen, welche versetzt zueinander angeordnet sind. Dies kann beispielsweise Vorteile bezüglich eines Fahrer- und/oder Beifahrerraums haben, wodurch ein Platzgewinn erzielt werden kann.

Bei einer weiteren vorteilhaften Ausführungsform der erfindungsgemäßen Lösung ist der Verbindungsträger mit zumindest einem Querträgerelement und/oder mit dem Stützelement fest verbunden, insbesondere verschweißt oder verklebt. Hierbei wird der Querträger mit seinen beiden Querträgerelementen, dem Verbindungsträger und dem Stützelement zunächst in loser Verbindung zueinander im Kraftfahrzeug angeordnet und erst nach dem Befestigen der beiden Querträgerelemente und des Stützelements an der Karosserie fest miteinander verbunden. Diese fest Verbindung kann beispielsweise durch eine Schweißnaht oder eine Verklebung der einzelnen Komponenten erfolgen, wobei diese dann in spannungsfreiern Zustand miteinander verbunden werden können, was sich positiv auf die Langlebigkeit der einzelnen Bauteilkomponenten auswirkt, da diese dann eine deutlich geringere Materialbelastung durch Spannungen aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf einen erfindungsgemäßen Querträger,
- Fig. 2: eine Schnittdarstellung in der Schnittebene A-A im Bereich eines Verbindungsträgers,
- Fig. 3: eine Schnittdarstellung in der Schnittebene B-B,
- Fig. 4: eine Ansicht auf den erfindungsgemäßen Querträger im Bereich des Verbindungsträgers von oben,
- Fig. 5: eine Ansicht wie in Fig. 4, jedoch von hinten.

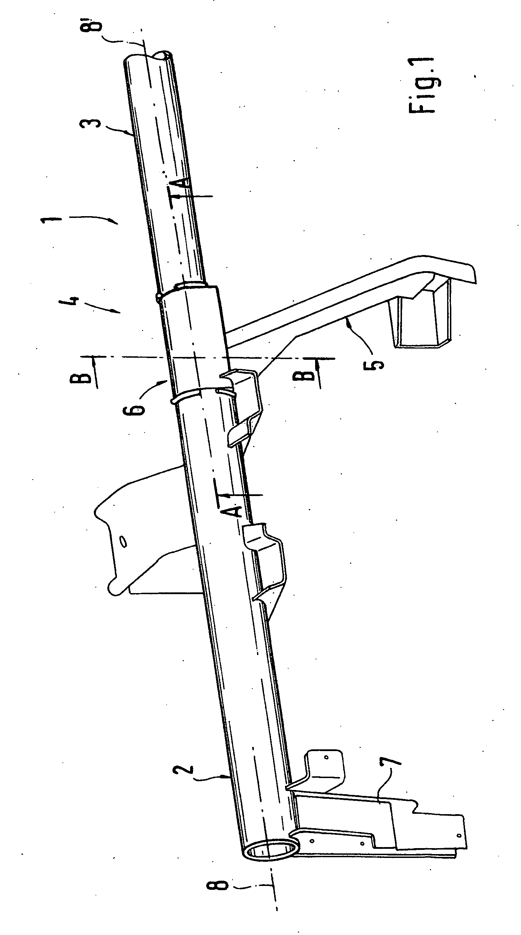

Entsprechend Fig. 1 weist ein erfindungsgemäßer Querträger 1, welcher hier als Cockpitquerträger ausgebildet ist, zwei Querträgerelemente 2, 3 auf. Jeweils längsendseitig ist der Querträger 1 mit einer nicht gezeigten Karosserie eines Kraftfahrzeugs, insbesondere mit den A-Säulen desselben, verbindbar. Hierzu sind an den Längsendbereichen der einzelnen Querträgerelemente 2, 3 jeweils mit den A-Säulen verbindbare Konsolen 7 angeordnet, wobei gemäß Fig. 1 lediglich die Konsole 7 am Querträgerelement 2 gezeigt ist. In seinem mittleren Bereich 4 stützt sich der Querträger 1 über ein Stützelement 5 ebenfalls an der Karosserie, vorzugsweise an einem nicht gezeigten Längsmitteltunnel des Kraftfahrzeugs ab und reduziert dadurch die Durchbiegung des Querträgers 1. In dem mittleren Bereich 4 sind die beiden Querträgerelemente 2, 3 über einen Verbindungsträger 6, hier in der Art einer Hülse ausgebildet, miteinander verbunden, wobei der Verbindungsträger 6 einen Toleranzausgleich in Längsrichtung des Querträgers 1, also in Fahrzeugquerrichtung, erlaubt. Eine Verbindung zwischen dem Querträger 1 und dem Stützelement 5 erfolgt erfindungsgemäß über den Verbindungsträger 6, wobei die Verbindung zwischen dem Verbindungsträger 6 und dem Stützelement 5 ebenfalls so ausgestaltet ist, dass ein Toleranzausgleich, diesmal in vertikaler Richtung, möglich ist.

Durch die erfindungsgemäße Lösung wird somit ein Querträger 1 geschaffen, welcher zunächst bezüglich der Verbindungen zwischen dem Verbindungsträger 6 und den beiden Querträgerelementen 2, 3 sowie den Verbindungen zwischen dem Verbindungsträger 6 und dem Stützelement 5 ausrichtbar, d.h. insbesondere justierbar ist. In diesem ausrichtbaren Zustand kann der Querträger 1 im Kraftfahrzeug eingebaut werden, wobei beispielsweise die Konsolen 7 fest mit den A-Säulen und das Stützelement 5 fest mit der Karosserie, insbesondere fest mit dem Längsmitteltunnel des Kraftfahrzeugs verbunden werden. Anschließend werden die bis dahin losen Verbindungen zwischen dem Verbindungsträger 6 einerseits und den Querträgerelementen 2, 3 bzw. dem Stützelement 5 andererseits fixiert, indem die einzelnen Komponenten beispielsweise miteinander verschweißt oder verklebt werden. Der erfindungsgemäße Querträger 1 ermöglicht so einen spannungsfreien Einbau des Querträgers 1 in das Fahrzeug, da sich üblicherweise auftretende Fertigungstoleranzen über die losen Verbindungen zwischen dem Verbindungsträger 6 einerseits und den beiden Querträgerelementen 2, 3 bzw. dem Stützelement 5 andererseits leicht ausgleichen lassen.

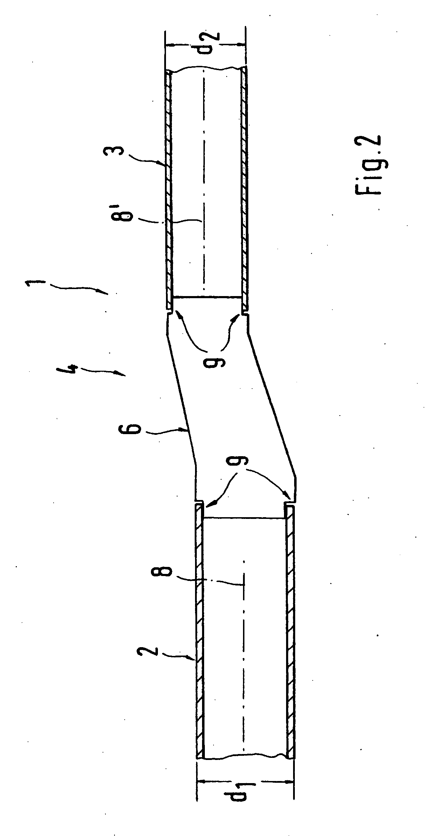

Gemäß Fig. 1 sind die beiden Querträgerelemente 2, 3 als Rohre ausgebildet, wobei auch andere Querschnittsformen von der Erfindung umfasst sein sollen. Insbesondere kann der Verbindungsträger 6 zwischen den beiden Querträgerelementen 2, 3 so gestaltet sein, dass beispielsweise das Querträgerelement 2 einen im Vergleich zum Querträgerelement 3 größeren Querschnitt bzw. Durchmesser aufweist. Desweiteren ist auch denkbar, dass der Verbindungsträger 6 eine gekrümmte Form aufweist und dadurch eine Verbindung von zwei nicht miteinander fluchtenden Querträgerelementen 2, 3 erlaubt. Eine derartige Verbindung ist beispielsweise in Fig. 2 dargestellt, wobei hier einerseits die Achsen 8, 8' des Querträgerelements 2, 3 parallel zueinander verlaufen und andererseits ein Durchmesser d₁ des Querträgerelements 2 größer ist als ein Durchmesser d₂ des zweiten Querträgerelements 3. Darüber hinaus ist denkbar, dass der Verbindungsträger 6 so ausgestaltet ist, dass die beiden Achsen 8, 8' der Querträgerelemente 2, 3 geneigt zueinander verlaufen.

Ebenfalls der Fig. 2 zu entnehmen ist, dass der Verbindungsträger 6 und ein jeweiliger Längsendbereich der beiden Querträgerelemente 2, 3 formschlüssig ineinander greifen, wobei die Verbindung zwischen dem Verbindungsträger 6 und den beiden Querträgerelementen 2, 3 jeweils als Steckverbindung ausgebildet ist, so dass der Verbindungsträger 6 zumindest teilweise in das jeweilige Querträgerelement 2, 3 einschiebbar bzw. einsteckbar ist. Im montierten Zustand werden dann die formschlüssig aneinander anliegenden Flächen des Verbindungsträgers 6 und des Querträgerelements 2 bzw. 3 fest miteinander verbunden, beispielsweise verschweißt oder verklebt. Eine Verschweißung bzw. Verklebung kann dabei gemäß Fig. 2 in den mit den Bezugszeichen 9 bezeichneten Bereichen erfolgen.

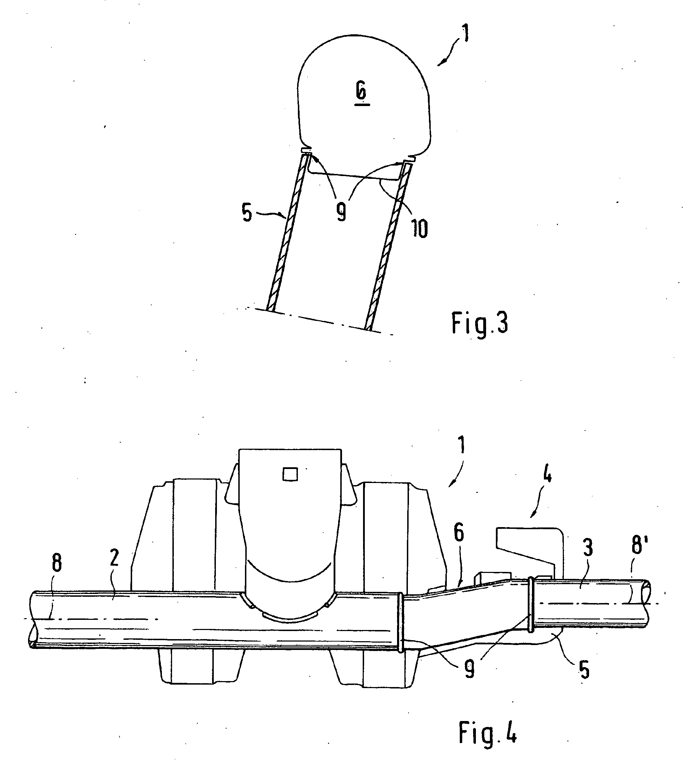

Ebenso wie die Verbindung zwischen dem Verbindungsträger 6 und den beiden Querträgerelementen 2, 3 gestaltet ist, kann auch die Verbindung zwischen dem Verbindungsträger 6 und dem Stützelement 5 gestaltet sein, was gemäß Fig. 3 anschaulich dargestellt ist. Hierbei ist die Verbindung zwischen dem Verbindungsträger 6 und dem Stützelement 5 ebenfalls als Steckverbindung ausgebildet, wobei der Verbindungsträger 6 über einen gewissen Bereich in das Stützelement 5 eintaucht. Ebenfalls mit dem Bezugszeichen 9 sind hierbei mögliche Schweiß- bzw. Klebestellen bezeichnet, welche eine feste Verbindung zwischen dem Verbindungsträger 6 und dem Stützelement 5 bewirken.

Der Verbindungsträger 6 kann aus unterschiedlichen Materialien, insbesondere aus Metallguss hergestellt sein, wobei auch andere Materialien denkbar sind, sofern diese die benötigte Steifigkeit besitzen. Bei einem als Gussteil ausgebildeten Verbindungsträgers 6 wird ein Versatz zwischen dem fahrerseitigen Querträgerelement 2 und dem beifahrerseitigen Querträgerelement 3 bei gleichzeitig guten Crasheigenschaften und geringen Lenkungsresonanzen erreicht. Die Querträgerelemente 2, 3 und/oder das Stütztelement 5 sind vorzugsweise als Hohlprofil, insbesondere als Rohr, ausgebildet und besitzen dadurch bereits eine sehr hohe Biegesteifigkeit und vorteilhafterweise ein geringes Gewicht. Insbesondere letzterer Punkt ist beim Sportwagenbau von großer Bedeutung.

In Fig. 4 ist wiederum der mittlere Bereich 4 des Querträgers 1 gezeigt, wobei hier besonders gut die versetzten Achsen 8, 8' der beiden Querträgerelemente 2, 3 zu erkennen sind. Ebenfalls gut zu erkennen sind die unterschiedlichen Durchmesser d₁, d₂ der beiden Querträgerelemente 2, 3, wobei der, die beiden Querträgerelemente 2, 3 verbindende Verbindungsträger 6 hier als Reduzierung ausgebildet ist. Am Querträgerelement 2 kann darüber hinaus beispielsweise eine Lenksäule angebunden sein, woraus der etwas stärkere Querschnitt bzw. der etwas größere Durchmesser des Querträgerelements 2 im Vergleich zum Querträgerelement 3 resultieren kann.

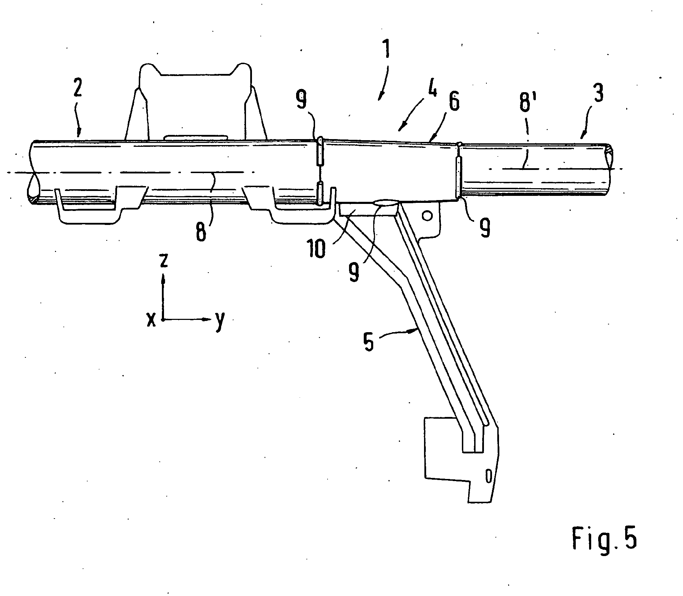

In Fig. 4 ist der Querträger 1 in seinem mittleren Bereich 4 von hinten dargestellt, wobei ein nach unten von dem Verbindungsträger 6 abstehender Vorsprung 10 besonders gut zu erkennen ist, welcher in das Stützelement 5 eingesteckt ist und welcher den erfindungsgemäßen Toleranzausgleich in z-Richtung ermöglicht. Als z-Richtung wird hierbei im wesentlichen die vertikale Richtung bezeichnet, während die y-Richtung die Fahrzeugquerrichtung und die x-Richtung die Fahrzeuglängsrichtung darstellt (vgl. Fig. 5).

Generell sieht der erfindungsgemäße Querträger 1 einen Einbau desselben mit losen Verbindungen zwischen dem Verbindungsträger 6 und dem Stützelement 5 bzw. den beiden Querträgerelementen 2, 3 vor. Sind die beiden Querträgerelemente 2, 3 jeweils endseitig mit den A-Säulen der Karosserie des Kraftfahrzeugs verbunden und ist auch das Stützelement 5 mit der Karosserie, beispielsweise mit dem Längsmitteltunnel fest verbunden, so können die noch lose Verbindungen zum Verbindungsträger 6 nunmehr fixiert, insbesondere durch eine Verklebung oder eine Verschweißung unlösbar verbunden werden. Dies ermöglicht den spannungsfreien Einbau des Querträgers 1 in der Karosserie, wobei zugleich gewisse Fertigungstoleranzen, welche nahezu unvermeidlich sind, ausgeglichen werden können.

## Patentansprüche

1. Querträger (1) in einem Kraftfahrzeug, der sich seitlich an A-Säulen der Karosserie und in einem mittleren Bereich (4) über ein Stützelement (5) an einem Längsmitteltunnel des Kraftfahrzeugs abstützt, wobei der Querträger (1) zumindest zwei Querträgerelemente (2, 3) aufweist, die in einem mittleren Bereich (4) des Querträgers (1) über einen Verbindungsträger (6) miteinander verbunden sind, wobei der Verbindungsträger (6) einen Toleranzausgleich in Fahrzeugquerrichtung erlaubt, **dadurch gekennzeichnet, dass** der Querträger (1) über den Verbindungsträger (6) mit dem Stützelement (5) verbunden ist und dass die Verbindung zwischen dem Verbindungsträger (6) und dem Stützelement (5) einen Toleranzausgleich in vertikaler Richtung ermöglicht.

2. Querträger nach Anspruch 1, **dadurch gekennzeichnet, dass** der Verbindungsträger (6) und ein jeweiliger Längsendbereich der beiden Querträgerelemente (2, 3) und/oder ein Längsendbereich des Stützelementes (5) formschlüssig miteinander verbindbar sind.

3. Querträger nach Anspruch 1 oder 2, **dadurch gekennzeichnet, dass** der Verbindungsträger (6) und der jeweilige Längsendbereich der beiden Querträgerelemente (2, 3) und/oder der Verbindungsträger (6) und der Längsendbereich des Stützelementes (5) ineinander einsteckbar sind.

4. Querträger nach einem der Ansprüche 1 bis 3, **dadurch gekennzeichnet, dass** die Querträgerelemente (2, 3) unterschiedliche Querschnittsabmessungen aufweisen.

5. Querträger nach einem der Ansprüche 1 bis 4, **dadurch gekennzeichnet, dass** der Verbindungsträger (6) eine gekrümmte Form aufweist.

6. Querträger nach einem der Ansprüche 1 bis 5, **dadurch gekennzeichnet, dass** zumindest eines der Querträgerelemente (2, 3) und/oder das Stützelement (5) einen runden Querschnitt aufweisen.

7. Querträger nach einem der Ansprüche 1 bis 6, **dadurch gekennzeichnet, dass** der Verbindungsträger (6) mit zumindest einem Querträgerelement (2, 3) und/oder mit dem Stützelement (5) fest verbunden, insbesondere verschweißt oder verklebt, ist.

8. Querträger nach einem der Ansprüche 1 bis 7, **dadurch gekennzeichnet, dass** der Verbindungsträger (6) als Metallgussteil hergestellt ist.

9. Querträger nach einem der Ansprüche 1 bis 8, **dadurch gekennzeichnet, dass** zumindest eines der Querträgerelemente (2, 3) und/oder das Stützelement (5) als Hohlprofil, insbesondere als Rohr ausgebildet sind.

10. Fahrzeug mit einem Querträger nach einem der Ansprüche 1 bis 9.

## Claims

1. Cross member (1) in a motor vehicle, which cross member is supported laterally on A pillars of the body and, in a central region (4), on a longitudinal central tunnel of the motor vehicle via a support element (5), with the cross member (1) having at least two cross member elements (2, 3) which are connected to one another in a central region (4) of the cross member (1) by means of a connecting member (6), with the connecting member (6) permitting tolerance compensation in the vehicle transverse direction, **characterized in that** the cross member (1) is connected by means of the connecting member (6) to the support element (5) and **in that** the connection between the connecting member (6) and the support element (5) permits tolerance compensation in the vertical direction.

2. Cross member according to Claim 1, **characterized in that** the connecting member (6) and a respective longitudinal end region of the two cross member elements (2, 3) and/or a longitudinal end region of the support element (5) can be connected to one another in a positively locking manner.

3. Cross member according to Claim 1 or 2, **characterized in that** the connecting member (6) and the respective longitudinal end region of the two cross member elements (2, 3) and/or the connecting member (6) and the longitudinal end region of the support element (5) can be plugged into one another.

4. Cross member according to one of Claims 1 to 3, **characterized in that** the cross member elements (2, 3) have different cross-sectional dimensions.

5. Cross member according to one of Claims 1 to 4, **characterized in that** the connecting member (6) has a curved shape.

6. Cross member according to one of Claims 1 to 5, **characterized in that** at least one of the cross member elements (2, 3) and/or the support element (5) have/has a round cross section.

7. Cross member according to one of Claims 1 to 6, **characterized in that** the connecting member (6) is fixedly connected, in particular welded or adhesively bonded, to at least one cross member element (2, 3) and/or to the support element (5).

8. Cross member according to one of Claims 1 to 7, **characterized in that** the connecting member (6) is produced as a metal cast part.

9. Cross member according to one of Claims 1 to 8, **characterized in that** at least one of the cross member elements (2, 3) and/or the support element (5) are/is formed as a hollow profile, in particular as a tube.

10. Vehicle having a cross member according to one of Claims 1 to 9.

## Revendications

1. Traverse (1) dans un véhicule automobile, qui s'appuie latéralement sur des colonnes A de la carrosserie et dans une région centrale (4) par le biais d'un élément de support (5) sur un tunnel médian longitudinal du véhicule automobile, la traverse (1) présentant au moins deux éléments de traverse (2, 3) qui sont connectés l'un à l'autre dans une région centrale (4) de la traverse (1) par le biais d'un support de connexion (6), le support de connexion (6) permettant une compensation des tolérances dans la direction transversale du véhicule, **caractérisée en ce que** la traverse (1) est connectée par le biais du support de connexion (6) à l'élément de support (5) et **en ce que** la connexion entre le support de connexion (6) et l'élément de support (5) permet une compensation des tolérances dans la direction verticale.

2. Traverse selon la revendication 1, **caractérisée en ce que** le support de connexion (6) et une région d'extrémité longitudinale respective des deux éléments de traverse (2, 3) et/ou une région d'extrémité longitudinale de l'élément de support (5) peuvent être connectés l'un à l'autre par engagement positif.

3. Traverse selon la revendication 1 ou 2, **caractérisée en ce que** le support de connexion (6) et la région d'extrémité longitudinale respective des deux éléments de traverse (2, 3) et/ou le support de connexion (6) et la région d'extrémité longitudinale de l'élément de support (5) peuvent être enfichés l'un dans l'autre.

4. Traverse selon l'une quelconque des revendications 1 à 3, **caractérisée en ce que** les éléments de traverse (2, 3) présentent des dimensions différentes en section transversale.

5. Traverse selon l'une quelconque des revendications 1 à 4, **caractérisée en ce que** le support de connexion (6) présente une forme courbe.

6. Traverse selon l'une quelconque des revendications 1 à 5, **caractérisée en ce qu'**au moins l'un des éléments de traverse (2, 3) et/ou l'élément de support (5) présentent une section transversale ronde.

7. Traverse selon l'une quelconque des revendications 1 à 6, **caractérisée en ce que** le support de connexion (6) est connecté fixement, notamment par soudage ou par collage, à au moins un élément de traverse (2, 3) et/ou à l'élément de support (5).

8. Traverse selon l'une quelconque des revendications 1 à 7, **caractérisée en ce que** le support de connexion (6) est réalisé sous forme de pièce moulée en métal.

9. Traverse selon l'une quelconque des revendications 1 à 8, **caractérisée en ce qu'**au moins l'un des éléments de traverse (2, 3) et/ou l'élément de support (5) sont réalisés sous forme de profilé creux, notamment sous forme de tube.

10. Véhicule comprenant une traverse selon l'une quelconque des revendications 1 à 9.
